# EUROPEAN PATENT APPLICATION

(11) **EP 2 028 762 A1**
(43) Date of publication of application: **25.02.2009**
(21) Application number: 07114620.3
(22) Date of filing: 20.08.2007
(51) Int. Cl.: H03H 17/02, H04B 1/707, G01S 1/00

(54) **Device and method for searching satellite signals**

(71) Applicant: Septentrio N.V., 3001 Leuven (BE)
(72) Inventor: De Wilde, Wim, 3010 Kessel-Lo (BE); Sleewaegen, Jean-Marie, 1090 Jette (BE)
(74) Representative: pronovem

(57) **Abstract**

The present invention is related to a method for searching for satellite signals with a global navigation satellite system receiver, comprising the steps of:
- programming a reconfigurable logic device comprised in the global navigation satellite system receiver with instructions for signal acquisition,
- acquiring the satellite signals by means of said reconfigurable logic device,
- reprogramming the reconfigurable logic device to make it operable as a tracking device,
- tracking the acquired satellite signals by means of the reprogrammed reconfigurable logic device.

## Description

### Field of the invention

The present invention relates to the field of devices and methods for searching satellite signals.

### State of the art

Global Navigation Satellite System (GNSS) is a general name for a satellite navigation system. All systems of this kind are frequently called 'GPS', although GPS specifically describes the American system. A global navigation satellite system comprises, among other things, a constellation of multiple navigation satellites, which are orbiting the earth and which each transmit dedicated navigation signals also called 'ranging signals'. Global navigation satellite signal reception functionality enables a device to receive, acquire and track the global navigation satellites' ranging signals. Global navigation satellite signal processing functionality further enables determining geographic position (positioning), location (locating) and course of any person, vessel or object equipped with a navigation receiver. All systems built so far work according to the same principle: the signal from at least four satellites is evaluated and the receiver computes its position.

At present there are two operational systems: GPS and its Russian counterpart, Glonass. In a couple of years new systems such as the European Galileo or the Chinese Compass will get operational.

Each satellite transmits one or more carriers modulated with one or more pseudorandom (PRN) codes. The received signal consists of a Doppler-shifted and time-delayed version of that transmitted signal. Because each navigation satellite has a different velocity and is at a different distance from the receiver, the Doppler shift and the time delay is satellite-dependent.

In the first seconds of operation of a GNSS receiver, the Doppler frequency shifts and delays of the visible satellites are unknown and the main receiver activity is to search the Doppler/delay space for available signals. This initial phase is referred to as 'initial acquisition'. At the end of this phase, the receiver knows (i) which satellites are visible, (ii) at which approximate Doppler frequency and (iii) at which approximate delay.

It is important that the initial acquisition of signals be performed as fast as possible, as it constitutes an important contribution in the so-called 'time-to-first-fix', i.e. the time from start-up of the receiver (e.g. after having been in a standby mode) till the first position is available to the user. The duration of the initial acquisition is proportional to the size of the Doppler/delay search space. In its turn, this size is proportional to the length of the PRN code: shorter PRN codes result in smaller search spaces and in faster initial acquisition.

Upon completion of the initial acquisition, the receiver switches into signal tracking mode, where the Doppler and delay parameters of the signals of each individual satellite are accurately tracked and measured. Periodically, even in tracking mode, new rising satellites may have to be acquired, but this is not the main activity of the receiver. Signal tracking involves different algorithms than acquisition and must meet very different requirements. In acquisition the focus is set on the speed at which the search space is scanned, whereas in tracking the focus is set on the accuracy of the Doppler and delay estimation.

Traditionally, GNSS receivers have a plurality of hardware tracking channels, each of them comprising a number of correlators and frequency control units and each of them being allocated to the demodulation of a particular GNSS satellite. There is no hardware specifically designed for signal acquisition: the hardware tracking channels are simply reused for acquisition. This approach has been adequate for the GPS and Glonass Coarse/Acquisition (C/A) PRN codes, which are short and relatively easy to acquire. However, the emerging Galileo, Compass and modernized GPS signals all use significantly longer PRN codes. The traditional approach whereby the same hardware is used for acquisition and tracking, would lead to an unacceptably long initial acquisition time.

To enable efficient acquisition of new signals such as Galileo, Glonass or modernized GPS several techniques have been proposed, mostly relying on the presence of a large number of correlators, usually placed in a dedicated acquisition unit operating independently of the channels. These correlators compute the cross-correlation function between the received satellite signals and a local replica of the PRN code that the receiver is programmed to acquire. The position of the maximum of this cross-correlation function indicates the satellite signal delay.

The core of an acquisition unit often consists of a matched filter, i.e. a finite impulse response filter the coefficients of which correspond to the time reversed PRN sequence or a subset thereof. This is because a matched filter is a hardware-efficient method to calculate the cross-correlation between the received signal and the PRN code sequence contained in the matched filter.

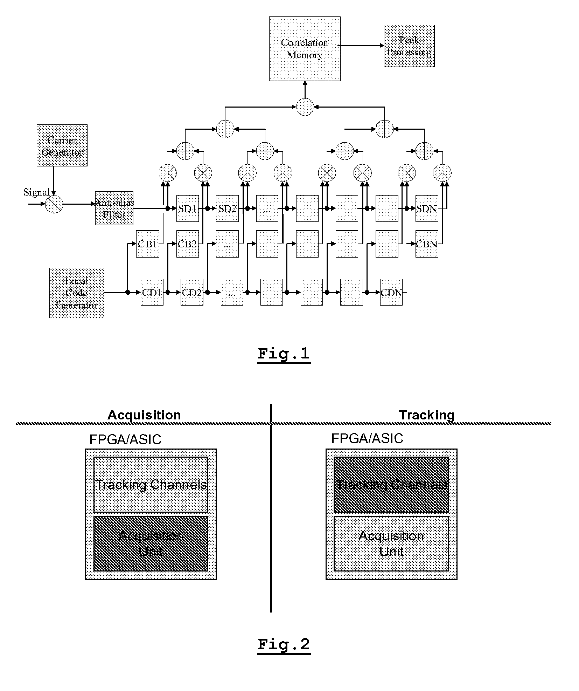

A standard architecture of such a matched filter based acquisition unit is shown in Fig.1. After conversion to base-band of the frequency band to be searched by a locally generated carrier, the signal is lowpass filtered to overcome aliasing of high frequency noise since the matched filter part often is clocked at a lower rate. The filter output enters the matched filter. Fig.1 shows a typical GPS implementation of such a filter. All rectangular cells in Fig.1 are registers, whereas the circles represent combinatorial logic. The delay lines (SD, CB and CD) are typically clocked at a rate close to twice the code chipping rate. The number of matched filter taps (or the delay line length) typically ranges from a few hundreds to a few thousands. The satellite signal samples enter the delay line SD and are multiplied with samples of a fragment of the PRN code replica stored in the buffer CB. The results enter an adder tree that calculates the integration result. Meanwhile the code delay line (CD) is filled with the next samples of the local PRN code replica. Once the initial content of cell SD1 has shifted to SDN, N possible code delays have been investigated, i.e. the correlation function has been evaluated at N successive delays. Then the next code fragment is loaded from the code delay line (CD) into the buffer (CB). The results of successive correlations/integrations can be added coherently or non-coherently, i.e. with or without preservation of phase information.

A dedicated acquisition unit such as in Fig.1 not only consumes a significant amount of hardware resources but also remains dormant during most of the receiver operation: it is mainly used in the initial acquisition phase and it remains inactive otherwise.

This means that in current designs receivers able to process the upcoming Galileo, Compass and modernized GPS signals comprise dedicated search units, which are mainly used in the start-up phase of the receiver, and tracking channels, which start operating when the initial acquisition is done (see Fig.2). A significant amount of the available logic circuits has to be dedicated for initial search, while this is only used during a fraction of the operating time of the receiver. This is at the cost of size and power consumption. Alternatively, to meet size and power requirements, the designer may be forced to trade off acquisition speed against other performance parameters. For instance, the number of tracking channels may have to be decreased to leave space for a powerful acquisition unit.

Many prior art GPS receivers have a reconfigurable architecture. GPS receivers of this type are based on digital signal processors of which the software can be updated and often use field programmable gate arrays (FPGAs) for computationally intensive base-band functions. Several examples of FPGA-based receivers are discussed in the literature. Reference is made to papers of Xiaoli et al. ('Design of Software-based GPS/Galileo receiver for Applications', China Communications, Dec.2006, pp.42-49), Parkinson et al. ('FPGA based GPS receiver design considerations', Proc. GNSS2005, Hong Kong, 8-10 Dec.2005) and De Wilde et al. ('A First-of-a-Kind Galileo Receiver Breadboard to Demonstrate Galileo Tracking Algorithms and Performances', ION GNSS 2004, 21-24 Sept.2004).

US6424913 and its equivalent EP1030186 relate to a GPS navigation system comprising a digital pre-processor for digitally preprocessing the GPS signals received from a front-end section. This pre-processor is a FPGA comprising a digital downconversion unit, a comparator and a packer. Also here, the FPGA remains fixed during receiver operation. A large part of the signal processing means, in particular the correlation of the GPS signal and the carrier signal, are realized by means of software. In this way, the use of expensive, special radiation resistant electronic components is avoided.

Patent application US2006/074554 discloses a software-defined GPS receiver including a hardware-oriented front-end for downconverting and digitizing the signals received from GPS satellites. The GPS signal processing functions such as acquisition/tracking a navigation computing are performed by software running on the receiver CPU rather than by firmware in a custom hardware device such as an ASIC (Application specific Integrated Circuit). Such a software-based processing is, at the current state of the technology, not able to compete with hardware-aided processing, due to the challenging requirements on the CPU speed.

Many matched filters are discussed in literature. An example of a state-of-the art matched filter based acquisition unit is discussed in the paper 'DirAc: An Integrated Circuit for Direct Acquisition of the M-Code Signal' (J.Betz et al., MITRE Corp, October 2004). The matched filter requires a correlator for any sample in the FIR filter delay line and a parallel adder of all correlator outputs.

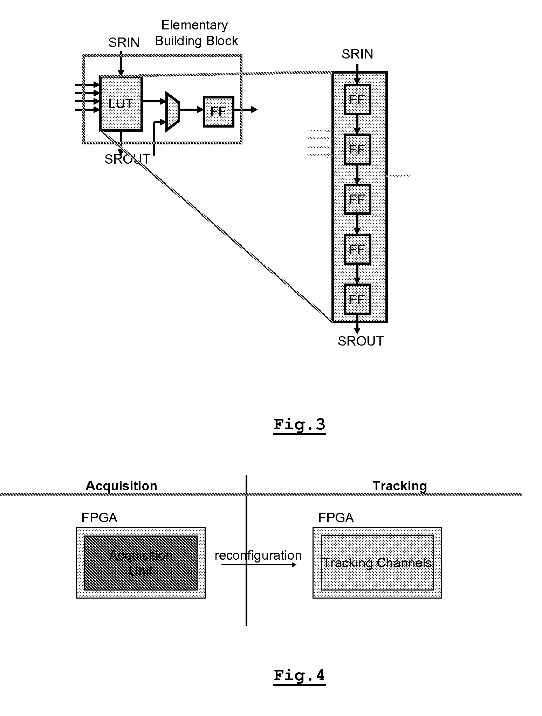

For other applications like UMTS a solution has been proposed to reduce the hardware implementation cost of a matched filter implemented on a FPGA (see *http:*//*www.xilinx.com*/*bvdocs*/*appnotes*/*xapp212.pdf*). This solution makes optimal use of an elementary building block as often available on FPGAs and structured ASICs (Fig.3). These devices have been so designed that the look-up tables in Fig.3 can be employed as a K bit shift-register by chaining the configuration flip-flops that normally set the logical function or as K bit RAM. In the example of Fig.3 K equals 5. It is to be noted that only the input of the first cell of the shift register and the output of the last cell can be accessed. The other taps of the shift register are not externally available. This type of shift register is referred to as an uninterrupted shift register. Further, it exploits the fact that FPGAs can be clocked faster than the rates used in typical communication signals. However, the proposed UMTS solution uses the folded transposed representation of the matched filter, which wouldn't be efficient in GPS because the proposed filter would require adders and registers with much more bits than needed for baseband signal quantization. In GPS single bit base-band quantization already provides an acceptable SNR, whereas the accumulated result typically needs around 10 bits. This ratio is much smaller in UMTS. The transposed implementation of a 1024 tap matched filter would require more than 8000 registers and full-adders whereas the parallel implementation only requires 1024 registers and 2036 full adders.

### Aims of the invention

The present invention aims to provide a power and cost efficient device for searching satellite signals. The invention further aims to provide a method for searching satellite signals.

### Summary of the invention

The present invention relates to an acquisition unit for a global navigation satellite system receiver. The acquisition unit comprises a matched filter circuit for correlating a received signal with a pseudo-random code. The matched filter circuit comprises a plurality of K-bit shift registers, with K > 1, for storing fragments of the received signal and the pseudo-random code. The matched filter further comprises combinatorial logic for combining the shift registers' outputs. The K-bit shift registers are preferably uninterrupted shift registers.

In a most preferred embodiment the acquisition unit further comprises a plurality of reconfigurable logic devices for configuring the K-bit shift registers. The reconfigurable logic devices are preferably Field Programmable Gate Arrays.

In an advantageous embodiment at least one of the reconfigurable devices further comprises memory for storing configuration information.

In another embodiment the acquisition unit further comprises a plurality of two-input multiplexers arranged for supplying input to the K-bit shift registers.

In an alternative embodiment the K-bit shift registers are emulated by means of RAM blocks.

Advantageously the acquisition unit further comprises an accumulator unit connected with the combinatorial logic.

In a further embodiment the reconfigurable logic devices are replaced by application specific integrated circuits.

The invention also relates to a global navigation satellite system receiver comprising an acquisition unit as previously described. In a specific embodiment the global navigation satellite system receiver comprises a plurality of said acquisition units connected in parallel.

In another aspect the present invention relates to a method for searching for satellite signals with a global navigation satellite system receiver, comprising the steps of :
- programming a reconfigurable logic device comprised in the global navigation satellite system receiver with instructions for signal acquisition,
- acquiring the satellite signals by means of the reconfigurable logic device,
- reprogramming the reconfigurable logic device to make it operable as a tracking device,
- tracking the acquired satellite signals by means of the reprogrammed reconfigurable logic device.

In a preferred embodiment the step of acquiring comprises searching for the Doppler and delay parameters of said satellite signals. Advantageously, the method then also comprises the step of storing the parameters in a memory.

In another embodiment a real-time clock keeps track of elapsed time during said step of reprogramming.

### Short description of the drawings

Fig. 1 represents an acquisition unit with matched filter as in the prior art.

Fig. 2 represents acquisition and tracking as in the prior art.

Fig. 3 represents an elementary building block of a FPGA.

Fig. 4 represents the approach according to the present invention, wherein logic devices are reconfigured from acquisition to tracking unit.

Fig. 5 represents a matched filter architecture of an acquisition unit of the invention.

Fig. 6 represents a first operating mode of the multiplexer.

Fig. 7 represents a second operating mode of the multiplexer.

Fig. 8 represents a third operating mode of the multiplexer.

Fig. 9 represents a fourth operating mode of the multiplexer.

Fig. 10 represents an embodiment of the invention wherein RAM memory blocks are employed.

Fig. 11 represents the operation of the embodiment shown in Fig.10.

### Detailed description of the invention

Advances in reconfigurable logic devices (such as Field Programmable Gate Arrays (FPGAs)) render it possible to build cost-effective satellite navigation receivers using such devices. Field programmable gate arrays are digital chips in which a pattern of generic logical functions like look-up tables and registers is repeated many times. The interconnections between these generic functions as well as the precise operation can be configured from a memory. In this way the same chip can be configured to carry very different circuits and hence it is usable for many applications. The present invention exploits this feature.

As set out in the prior art description FPGAs have already been used in GNSS receivers. However, their reconfigurability property has been only exploited in a very restrictive way: at receiver start-up the FPGA is loaded with a fixed configuration, which does not change during the operation of the receiver. Configuration changes only occur in the context of 'upgrades'. Furthermore, a traditional parallel acquisition engine such as in Fig.1 cannot be mapped efficiently in FPGA technology.

The present invention deals with acquisition process optimization in satellite receivers based on reconfigurable logic circuits. The optimization is twofold. Firstly, inefficient hardware resource use is addressed by fully exploiting the reconfigurability by dynamically adapting the functionality according to the operation mode of the receiver. Secondly, the acquisition unit itself is rethought to take full benefit of advanced characteristics of modern reconfigurable logic devices.

The dynamic reconfigurability is now addressed. In a first phase, the reconfigurable logic is loaded with a configuration optimized for acquisition. This configuration is able to perform fast acquisition of all the visible satellite signals, but unable to perform the tracking of these signals. Once the signals are acquired, the reconfigurable logic is partially or completely loaded with a standard configuration, optimized for signal tracking (see Fig.4). The main benefit is that no part of the reconfigurable logic is dormant while another is active. The size of the reconfigurable logic circuit can be largely reduced, with great impact on the cost and power consumption. Alternatively a more powerful acquisition unit can be implemented on the same platform.

Instead of waiting for receiver reconfiguration until the initial acquisition is completed, it is also possible to perform this reconfiguration in several steps. For instance, one could start with a pure acquisition configuration, then reconfigure half of the acquisition resources into N/2 tracking channels and eventually, as the acquisition progresses, switch to a configuration with N tracking channels.

A difference with prior art practice is that the receiver must hold several configuration files in its non-volatile memory instead of one. However, this is compensated for by the fact that each of these configuration files is smaller than a single unique configuration file and that memory is generally abundant and cheap in a receiver.

The operating principle of a GNSS receiver built according to the present invention is as follows:
(i) At start-up, the reconfigurable logic is loaded with a first configuration optimized for acquisition.
(ii) The reconfigurable logic searches for the Doppler and delay parameters of all available satellite signals.
(iii) These parameters are stored in memory and the firmware fully or partially loads the reconfigurable logic with a configuration fully or partially optimized for tracking. A real-time clock keeps track of elapsed time during reload.
(iv) The Doppler and delay parameters are restored from memory and directly applied to the tracking channels after extrapolating them to current values by means of the real-time clock.
(v) Steps (iii) and (iv) may be repeated several times to gradually evolve from an acquisition-oriented configuration to a tracking-oriented configuration.

More details are now provided on how an efficient acquisition unit can be built by suitably configuring the reconfigurable logic devices.

When designing the acquisition unit with FPGAs care should be taken that the implementation remains cost effective. A traditional matched filter implementation requires using one building block as in Fig.3 for each cell of the delay lines in Fig.1. This results in a highly inefficient use of these building blocks.

The present invention makes optimal use of the K-bit shift-register primitive of a FPGA as discussed in the prior art section. An important problem to overcome when using that primitive for building an acquisition unit is that only one flip-flop of the LUT K-bit shift register can be accessed at a time. To solve this the fact is exploited that code chipping rates of all known and planned GNSS systems are much lower than the clocking rates possible in today's FPGAs. As already said, in Fig.1 the delay line is clocked at a rate close to twice the code chipping rate. In the present invention the K-bit shift registers are clocked at least K+1 times faster than the sampling rate. By doing so, K cells of Fig.1 can be replaced by one single building block of the FPGA, which constitutes an optimization by a factor K in the use of the FPGA logic.

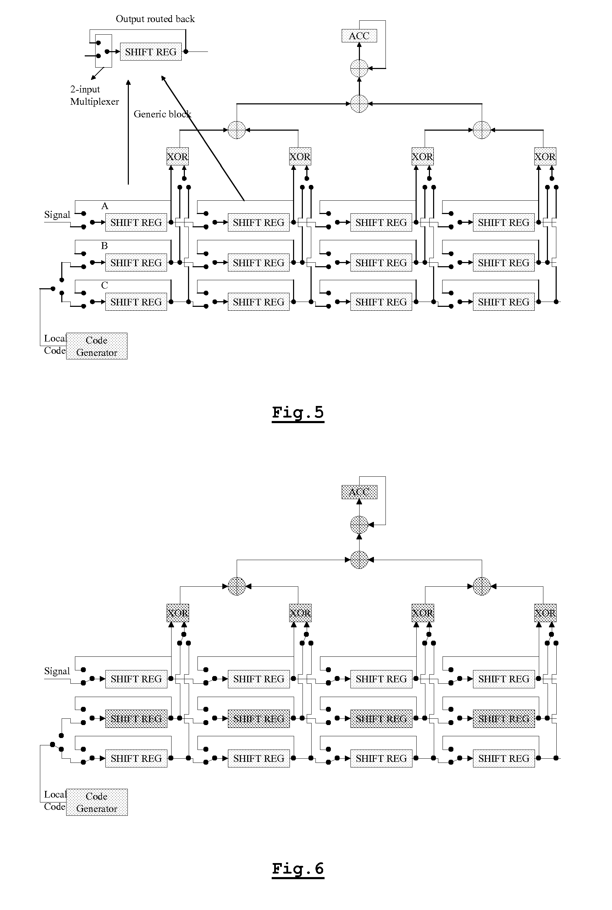

Fig.5 shows the data path of a suitable matched filter architecture. Three similar delay line structures (A,B,C) are used. Each delay line structure comprises N building blocks as indicated at the left top of Fig.5. These building blocks comprise a two input multiplexer and a K bit shift register. This shift register can be created using the look-up-table primitive of an FPGA (Fig.3) since only the input of the first flip-flop and the output of the last flip-flop need to be available. It is, in other words, an uninterrupted shift register as previously defined. Alternatively also an embodiment can be envisaged wherein a KxN bit RAM is applied (see below). The shift-register output of each block is routed back to the MUX of the block. The shift registers'outputs are XOR-ed and enter the adder-tree. The adder-tree output connects to an accumulator (ACC).

The multiplexers can advantageously be configured in four different modes, corresponding to different successive operating phases. Fig.6 shows a first mode (Mode A1) wherein the upper (A) and bottom (C) delay line are connected as two long shift registers fed by a signal sample and a local code sample, respectively. The code fragment with which correlation is to be made, has previously been loaded into the inactive delay line (B).

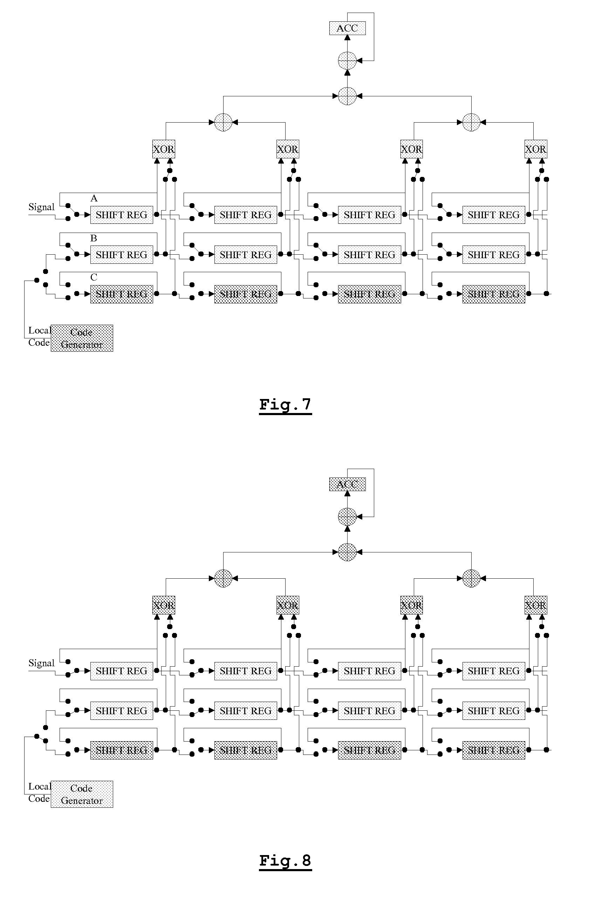

The multiplexers remain in mode A1 for one clock cycle only. After this, the input muxes in delay line A and B connect to their outputs (Mode B1, Fig.7). The delay lines are clocked K times and each time the result of the adder tree is accumulated. At the first clock cycle, the sum of cells 0, K, 2K, etc... is calculated, at the next clock cycle cells 1, K+1, 2K+1 are summed and so on. So, after K clock cycles, the sum of cells 0, 1, 2, etc... reside in the accumulation register. After this the multiplexers enter mode A1 again and the whole process resumes. One step of this process takes K+1 clock cycles (1 cycle in mode A1 and K cycles in mode B1).

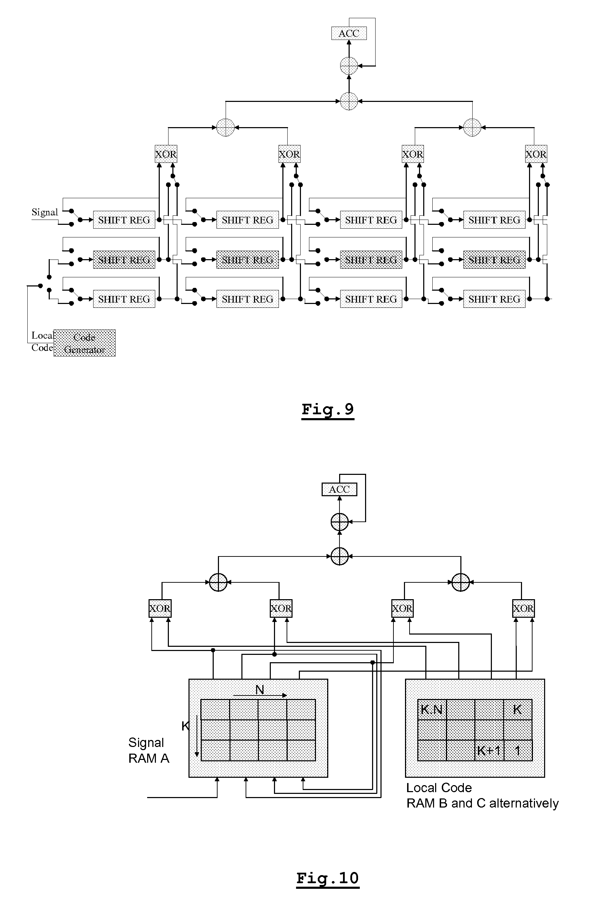

The above process is repeated N times. After these N*(K+1) clock cycles, the complete next code fragment resides in delay line C. Then the process is restarted with that difference that delay lines B and C swap roles for the next N*(K+1) clock cycles. Specifically, the matched filter circuit runs one cycle in mode A2 (Fig. 8) and K cycles in mode B2 (Fig. 9). This pattern is repeated N times. At the end, the process restarts from the beginning, in mode A1.

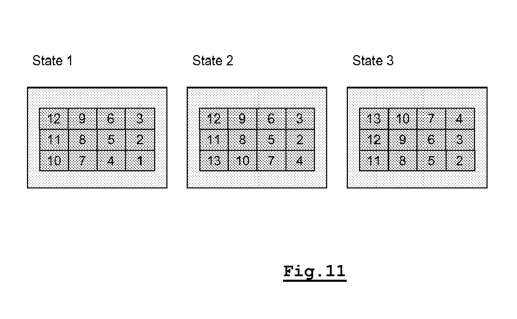

The matched filter architecture can be designed by emulating the shift registers with RAM blocks. This embodiment exploits the fact that modern digital chip technology (like FPGAs, ASICs, ...) has large memory blocks available (in the order of 0.5 to 20 kbit). In this embodiment every delay line structure (A,B,C) is substituted by a K row x N column RAM where K equals the length of the former shift register and N the number of shift registers. B and C may possibly be combined in one single RAM. One N-bit row of the signal and one of the code RAM enter the correlator tree as illustrated in Fig.10. Initially RAMs A and B are loaded with the first K.N samples of the input signal and local code in column-order (see Fig.11, State 1 for an example with K=3 and N=4, whereby the numbers represent the samples in chronological order.), and the upper row of these RAMs is fed to adder tree. That row contains the samples K, 2.K, ... until N.K. At the next clock cycle, the second row of both RAMs is fed to the adder tree (K-1,2.K-1,...,N.K-1) and correlated. The result is accumulated with the first one. This continues for K clock cycles until the K^{th} row has been accumulated. The complete correlation is available now. At clock cycle K+1, the K^{th} row is shifted by one bit to the right and a new signal sample is appended to the left (see Fig. 11, State 2 for an example). At the same time, a new local code sample is inserted in the currently unused RAM C. Further, the rows of all RAMs are cyclically permutated (which can be done by permuting the row addresses): the K^{th} row becomes the upper one, the first one becomes the second, and so on. Fig.11 State 3 shows the state of the RAM after such permutation. The correlation process restarts at clock cycle K+2 with this new arrangement of the rows. This process is repeated for N*(K+1) clock cycles. After that, the code-RAM C contains the next fragment of N.K code chips which has been loaded in the mean time, and the process resumes for another N*(K+1) cycles with RAMs B and C being swapped.

The RAM-based approach for implementing the matched filter of the acquisition unit offers many advantages. It can be efficiently implemented on any FPGA technology. The multiplexers in front of the adder tree can be avoided. The power consumption gets much better since power consuming register shifts are reduced drastically (with a factor K²).

The proposed approached is beneficial for ASIC technology as well, both in the shift-register and RAM based version. The adder tree is down-sized with the length of the shift register, which is a significant space reduction in any technology. Some ASIC cell libraries also contain efficient uninterrupted shift register primitives that can be used in the proposed approach and further improve the efficiency of the design over a flip-flop cell based design.

## Claims

1. Acquisition unit for a global navigation satellite system receiver comprising a matched filter circuit for correlating a received signal with a pseudo-random code, said matched filter circuit comprising a plurality of reconfigurable logic devices configured as a plurality of K-bit shift registers, with K > 1, for storing fragments of said received signal and said pseudo-random code, said matched filter further comprising combinatorial logic for combining said shift registers' outputs.

2. Acquisition unit for a global navigation satellite system receiver as in claim 1, whereby said K-bit shift registers are uninterrupted.

3. Acquisition unit for a global navigation satellite system as in claim 1 or 2, wherein said reconfigurable logic devices are Field Programmable Gate Arrays.

4. Acquisition unit for a global navigation satellite system receiver as in any of claims 1 to 3, whereby at least one of said reconfigurable devices further comprises memory for storing configuration information.

5. Acquisition unit as in any of the previous claims, further comprising a plurality of two-input multiplexers arranged for supplying input to said K-bit shift registers.

6. Acquisition unit as in any of the previous claims, wherein said K-bit shift registers are emulated by means of RAM blocks.

7. Acquisition unit as in any of the previous claims, further comprising an accumulator unit connected with said combinatorial logic.

8. Acquisition unit as in any of the previous claims, wherein said reconfigurable logic devices are replaced by application specific integrated circuits.

9. Global navigation satellite system receiver comprising an acquisition unit as in any of claims 1 to 8.

10. Global navigation satellite system receiver as in claim 9 comprising a plurality of said acquisition units connected in parallel.

11. Method for searching for satellite signals with a global navigation satellite system receiver, comprising the steps of :
- programming a reconfigurable logic device comprised in said global navigation satellite system receiver with instructions for signal acquisition,
- acquiring said satellite signals by means of said reconfigurable logic device,
- reprogramming said reconfigurable logic device to make it operable as a tracking device,
- tracking said acquired satellite signals by means of said reprogrammed reconfigurable logic device.

12. Method for searching for satellite signals as in claim 11, wherein said step of acquiring comprises searching for the Doppler and delay parameters of said satellite signals.

13. Method for searching for satellite signals as in claim 12, further comprising the step of storing said parameters in a memory.

14. Method for searching for satellite signals as in any of claims 11 to 13, wherein during said step of reprogramming a real-time clock keeps track of elapsed time.
